# EUROPEAN PATENT APPLICATION

(11) **EP 4 717 668 A1**
(43) Date of publication of application: **01.04.2026**
(21) Application number: 24203634.1
(22) Date of filing: 30.09.2024
(51) Int. Cl.: C01B 21/26, C01B 21/28, C01B 21/40

(54) **PROCESS FOR THE PRODUCTION OF NITRIC ACID**

(71) Applicant: CASALE SA, 6900 Lugano (CH)
(72) Inventor: OSTUNI, Raffaele, 6900 LUGANO (CH); CHALUPA, Jiri, 66501 ROSICE (CZ); SVOBODA, Petr, 14700 PRAHA (CZ); MATICHECCHIA, Angelo, 21100 VARESE (IT); CEREA, Iacopo, 6900 LUGANO (CH); OLDANI, Fabio, 21050 CANTELLO (IT)
(74) Representative: M. Zardi & Co S.A.

(57) **Abstract**

A mono-pressure process for production of nitric acid wherein the NOx absorber (15) is cooled by an absorption chiller (16), said absorption chiller being driven by low-grade heat recovered internally in the nitric acid process.

## Description

### Field of the invention

The invention relates to the production of nitric acid starting from catalytic combustion of ammonia with a mono-pressure process.

### Prior art

The production of nitric acid starting from catalytic combustion of ammonia (Ostwald process) includes the following main steps. The catalytic oxidation of ammonia is performed under pressure in a suitable ammonia oxidation reactor ("ammonia burner"), obtaining a gas ("nitrous gas") containing nitrogen oxides NOx (NO and NO2) and nitrous oxide (N2O) at a high temperature. The oxidation of ammonia occurs over a suitable catalyst, usually a catalyst gauze, in the presence of oxygen, normally ambient air fed by an air compressor.

The hot nitrous gas is cooled through a set of heat exchangers ("cooling train") including a cooler-condenser; from the cooler-condenser, a stream of cooled nitrous gas and a stream of acid condensate are sent to an absorber, where the nitrogen oxides are absorbed in water. The absorber, usually an absorption tower, produces a nitric acid solution and a tail gas withdrawn from top of the absorber. The tail gas is usually treated for abatement of NOx and N2O before being discharged. Being under pressure, the tail gas may also be expanded to recover energy. The nitric acid solution collected from the absorber is usually subject to bleaching.

Abatement of NOx is performed catalytically by passing the tail gas over a catalyst suitable to reduce NOx, usually adding ammonia as reducing agent.

The N2O may be reduced or decomposed in the same or a separate catalytic bed.

Various implementations of the above process exist and are described e.g. in the Ullmann's Encyclopaedia, 2012 Edition, "Nitric Acid". A distinction is made between the mono-pressure process and the dual pressure process. In the mono-pressure process, ammonia oxidation and absorption of NOx occur substantially at the same pressure, in other words, the ammonia burner and the absorber work at the same pressure, apart from pressure drops in the connections. A mono-pressure process usually works at a pressure from 5 to 15 bar. This pressure is dictated by the compressor which feeds the combustion air ("primary air") to the ammonia burner. In a dual-pressure process, the absorption of NOx is carried out at a greater pressure than ammonia oxidation, which means the nitrous gas effluent from the burner is compressed at some point before being fed to the absorber. For example, in a dual-pressure process the ammonia oxidation is performed at around 5 bar whereas the absorption of NOx is performed at 10 to 12 bar.

The dual-pressure process has the advantage of optimizing the pressure in the ammonia combustion section and in the absorption section. Nevertheless, the mono-pressure process is still of considerable interest due to its simpler layout, as it does not require the nitrous gas compressor which is an expensive item. In a mono-pressure process, the bleaching step is performed usually in the lower part of the absorption column, whereas in a dual-pressure process the bleaching step is performed in a separate vessel at a pressure lower than the absorption pressure.

The main drawback of the mono-pressure process is the need of a compromise between ammonia combustion where a low pressure is preferable and the absorption step where, in contrast, a higher pressure is advantageous. A relatively low pressure in the combustion stage reduces the energy consumption of the air compressor and provides a higher ammonia selectivity to NO in the ammonia oxidation, resulting in less consumption of the ammonia feedstock. However, a low pressure requires a larger absorber (e.g. larger diameter of the absorption column); absorption at low pressure increases the undesired NOx slipping from the overhead of the absorber (NOx contained in the tail gas) resulting in more consumption for the downstream abatement and more consumption of ammonia; the maximum concentration of the nitric acid in the product is comparably lower. Raising the overall pressure of the process would enable a size reduction of the absorber, a lower slip of the NOx from absorber and a more concentrated product, but would increase the compressor power and ammonia consumption.

A major challenge in the nitric acid process concerns the energy efficiency. The energy efficiency is mainly related to the recovery of the considerable amount of heat developed by the strongly exothermic combustion of ammonia. Known measures to recover this energy include the production of steam in the cooling train of the nitrous gas, and heating the tail gas before expansion. A nitric acid production process is usually able to export heat, typically as steam; the amount of heat that can be exported from the process may be regarded as an indicator of the energy efficiency of the process.

Another concern is the abatement of NOx and N2O in the tail gas, particularly because the norms are becoming even more stringent. A goal is reducing the amount of abatement catalyst and the amount of reducing agent required for the treatment of the tail gas. Still another concern is the avoidance of emissions of NO2 in the visible range, especially during start-up or shutdown, when the abatement system is not in the proper temperature range for operation.

A new design of a cooler-condenser for a nitric acid plant is described in a paper "New Cooler Condenser Design" by André de Smet, YARA, presented at the ANNA Conference 2011, Denver, Colorado. A description of a dual-pressure process can be found in a paper from I. Cerea and P. Miler, "Yara-Casale-Chemoproject Nitrogen for the first time together in the design and construction of a new Nitric Acid Plant. An overview of the project", presented at Asian Nitrogen+Syngas 2015 International Conference, Jakarta, 17^{th} -19^{th} November 2014.

### Summary of the invention

The present invention addresses the problem of how to solve or mitigate the above-mentioned drawbacks of the mono-pressure process for production of nitric acid. The invention aims to reduce the size of the absorber; to achieve a good energy efficiency which results in the possibility of a high steam/energy export; to provide low emissions of NOx and N2O in the atmosphere with low consumption of reducing agent and relatively small volume of abatement catalyst.

The above aims are reached with a process according to the claims.

A process according to the invention is a mono-pressure process which includes the steps of forming a nitrous gas from combustion of ammonia; feeding said nitrous gas, after cooling, to a NOx absorber where nitrogen oxides are absorbed in water to produce nitric acid; heat recovered from the nitric acid production process is used to drive a vapor absorption refrigeration process arranged to provide refrigeration to said NOx absorber.

Cooling the absorber is beneficial to the absorption process, similarly to the increase of pressure provided by the dual-pressure process, but without the need of a nitrous gas compressor. The advantage of cooling the absorber is known conceptually but practical implementation is limited by the need of a suitable refrigeration source. Cooling water may be available at ambient temperature which however is not cold enough to achieve a substantial advantage.

The invention is based on the ingenious finding of using heat recovered from the nitric acid production process to drive an absorption refrigeration process arranged to cool the NOx absorber. An absorption refrigeration process may use low-grade heat which otherwise would be lost; therefore, the invention is fully advantageous from the point of view of energy efficiency.

A further aspect of the invention is a mono-pressure nitric acid production plant according to the claims.

### Description of the invention

The invention uses an absorption process to provide refrigeration of the NOx absorber. Said absorption process is carried out in a suitable equipment which includes at least one absorption chiller. In an embodiment, said equipment includes a plurality of absorption chillers arranged in parallel, such as two chillers in parallel. The chillers arranged in parallel may work together at partial load. An advantage of multiple chillers is to have spare capacity during plant upset.

The absorption refrigeration process is a well-known refrigeration technique and thus its detailed description is not provided. The process includes basically the following steps: a refrigerant evaporates in a low partial pressure environment, thus providing the desired refrigeration effect. The gaseous refrigerant is then absorbed in a suitable liquid (lean solution) resulting in a rich solution; said rich solution is sent to a desorption step where the rich solution is heated so that the gaseous refrigerant is separated from the solution and the lean solution is regenerated; a condensation step where the gaseous refrigerant is condensed and sent back to the evaporation stage.

The evaporator and the absorber operate generally at a pressure lower than the desorber and condenser. The driving force of the process is the heat provided to the desorber, said heat being used to separate the refrigerant from the rich solution. Typically, a low-grade heat can be used for this purpose, whereas only little mechanical power is required to maintain circulation within the system. This is in contrast with a conventional vapour compression refrigeration system (VCRS) that requires significant mechanical power to compress the refrigerant vapours.

An absorption process uses a refrigerant and an absorbent, which have high affinity for each other. In other words, the refrigerant dissolves easily in the absorbent. In preferred embodiments, said absorption refrigeration process is a water-ammonia (also termed aqua-ammonia) process or, more preferably, a water- Lithium Bromide (LiBr) process. In a water-lithium bromide vapour absorption refrigeration system, water is the refrigerant while LiBr is the absorbent. In the absorber, the lithium bromide absorbs the water refrigerant, creating a solution of water and lithium bromide. Water can be evaporated under vacuum to provide refrigeration at low temperature, such as less than 5 °C. The water vapour is then absorbed in Lithium Bromide. The so obtained diluted LiBr (i.e. rich of refrigerant) is re-concentrated by providing heat and the water vapour separated from the solution is condensed.

The absorption refrigeration process may provide refrigeration to the NOx absorber by means of a suitable refrigerant medium. Said refrigerant medium may circulate in a closed circuit between the NOx absorber and the absorption chiller. Preferably, the absorption refrigeration process is configured to produce chilled water, as refrigerant medium, which is sent to the NOx absorber. The chilled water produced by the absorption refrigeration process may have a temperature significantly lower than ambient; in preferred embodiments the chilled water has a temperature not greater than 15 °C, more preferably not greater than 10 °C and still more preferably around or less than 5 °C. For example, the temperature of the chilled water is in the range of 1 to 10 °C or 1 to 5°C.

The hot nitrous gas is usually cooled in several heat exchangers forming a cooling train. Said heat exchangers (gas coolers) may be arranged to transfer heat to steam, water or to another process stream, for example to the tail gas or to the compressed air fed to the ammonia burner. Typically, the last heat exchanger before the NOx absorber is a cooler-condenser where the nitrous gas is cooled and partially condensed to form an acid condensate. The cooled gas and the acid condensate effluent from the cooler condenser are sent separately to the NOx absorber. Said cooler condenser is generally a shell-and-tube equipment.

In a highly preferred embodiment, at least part of the driving heat of the absorption refrigeration process is recovered from said cooler-condenser. This is particularly advantageous because heat recoverable from the cooler-condenser is typically at low temperature (low-grade heat) and, consequently, appears of little interest for energy recovery. In such preferred embodiment of the invention, this low-grade heat is used to provide a significant improvement to the entire process, by refrigerating the NOx absorber.

Hence, the invention preferably provides that an absorption chiller is coupled with the cooler condenser of the nitrous gas. The term coupled means that a suitable circuit of a heat transfer medium, such as hot water, is provided to transfer heat from the cooler condenser to the absorption chiller. The heat transferred by said circuit is the driving heat of the absorption chiller.

In another preferred embodiment, said cooler condenser includes a first stage where nitrous gas is cooled and a second stage where the cooled nitrous gas from the first stage is further cooled and condensed, and heat for the absorption refrigeration process is recovered from said first stage. For example, the first stage of the cooler condenser is a heat exchanger where heat is transferred to a water stream and the so obtained hot water is sent to the absorption chiller.

Preferably, the nitrous gas in the cooler condenser is cooled below the dew point. Advantages of cooling below the dew point will be further elucidated below.

Although heat recovery from the cooler condenser is preferred, some or all of the driving heat of the absorption refrigeration process may be recovered from other sources of the nitric acid process. In some embodiments, heat for the absorption refrigeration process may be recovered directly from the ammonia burner, for example from a heat exchanger housed in the ammonia burner. Preferred sources of heat for the absorption refrigeration process include a cooled support housed in the ammonia burner and the tail gas after expansion. Said cooled support may be a support of an internal component of the ammonia burner, e.g. the support of the ammonia oxidation catalyst, or the support of a tail gas heater included in the ammonia burner. Said cooled support is preferably below the basket.

The absorption refrigeration process may provide refrigeration to other process streams in addition to said NOx absorber. Examples of process streams that can be advantageously cooled in the absorption chiller include: a suction stream or an inter-stage stream of the air compression stage; a fresh water stream sent to the NOx absorber; an acid condensate stream leaving the cooler condenser prior to being supplied to the NOx absorber. The air compression stage is the stage arranged to feed compressed air to the ammonia burner.

The absorption of NOx may be performed in a plurality of absorption stages vertically arranged in the NOx absorber which is configured preferably as a column. Preferably, at least one absorption stage is cooled by a heat exchange element which is internally traversed by the refrigerant medium delivered by the absorption chiller.

The entire absorber or only a part thereof may be cooled by the absorption chiller. If only a portion of the absorber is cooled, the cooled portion is preferably an upper portion, such as the upper half or upper third of an absorption column. Accordingly, one or more upper stages of absorption may be cooled by the absorption chiller. An advantage of cooling specifically the upper part of the absorber is: the heat is removed at low temperature in the absorber where it provides more advantage to decrease the temperature, and less cooling duty is required there than e.g. at the bottom of the absorber where the bulk of NOx absorption occurs. Hence, this preferred embodiment minimizes the chilling duty to obtain a low slip of NOx.

The NOx absorber is usually an absorption column with internal absorption trays stacked in the column. All or some of the trays may be provided with respective cooling coils traversed by the refrigerant medium (e.g. chilled water) produced by the absorption chiller. Referring to the above example, only the trays located in the upper part of the column, such as upper half or upper third of the column, may have cooling coils connected to the absorption chiller.

The pressure of the process is preferably not greater than 13 bar, preferably in the range 7 to 10 bar, more preferably in the range 9 to 10 bar, such as 9.5 bar or 9.8 bar. The invention allows running the mono-pressure process at a mild pressure, below 10 bar, because the NOx absorber benefits from the refrigeration of the absorption chiller. Accordingly, the invention solves the problem of how to improve the mono-pressure process without the drawbacks of increasing the overall pressure.

The chiller of the NOx absorber can be operated during startup or shutdown transients to achieve a NOx abatement and avoid emissions of NO2 in the visible range. This is a further advantage because a visible emission is a source of concern and should be avoided.

Further advantages and preferred features of the invention are as follows.

As stated above, the nitrous gas is preferably cooled in the cooler-condenser below the dew point. The heat from the nitrous gas around the dew point is a large amount and would be otherwise wasted to cooling water.

In a simulated example for a 500 tons/day mono-pressure process, operated at 10 bar, cooling the nitrous gas from a higher to a lower temperature than the dew point of the nitrous gas (from 152 to 122 °C with dew point at 132 °C) provides a hot duty of 2.8 MW. Such hot duty can be transferred to hot water at 125 °C with a return temperature of 90 °C. With this hot duty and an exemplary refrigeration unit COP (coefficient of performance) of 0.8, a chilling duty of about 2.2 MW is produced, which for the size of 500 tons/day enables to reduce the absorber height by 25%, for example a 40 meters column may be reduced to 30 m. So, the specific integration enables to achieve the size reduction of absorber, lower NOx slip, and more concentrated acid. The preferred temperature of the chilled water of 1 to 5 °C enables even lower NOx slip, without the problem of freezing the water / nitric acid solution in the column.

Advantages of the Li-Br chiller include: this specific absorption chiller system has a relatively high coefficient of performance (COP); it works with low temperatures of the hot water, such as a temperature of 125 °C of the supply and 70 to 80 °C of the return, to deliver the chilled water at about 5 °C. Hence, this refrigeration system allows production of a chilled water with a temperature suitable to chill the absorber. Compared to another refrigeration system based on water/ammonia absorption chilling, a Li-Br system has higher COP and works with lower temperature of the hot stream.

The process may include heating the tail gas from the absorber in a tail gas heating section, before N2O abatement and expansion. In an embodiment, the tail gas is heated to above 440 °C before N2O abatement and subsequent expansion. Preferably the tail gas is heated to a temperature in the range 440 to 480 °C. Preferably, said tail gas heating section includes a coil located in the ammonia burner below a cooled support, where the tail gas passing through said coil is heated to a temperature greater than 440 °C, preferably greater than 450 °C, more preferably of about 465 °C. A related advantage is to increase power recovery in the subsequent expansion and improve N2O abatement. In some embodiments, a bypass of said coil is provided, to give better control of the temperature of the tail gas at the inlet of the abatement reactor.

Preferred conditions of the tail gas at the inlet of a tail gas expander are a pressure of about 10 bar and a temperature of about 480 °C. Preferably, the process includes heat recovery from the tail gas after expansion in a suitable heat exchanger, preferably a heat exchanger connected to the steam network, which is referred as economizer. A related advantage is increased steam export and recovery of low-grade and often unused heat from expander discharge. Particularly with the above inlet conditions, the expanded tail gas has still a considerable heat content, albeit at a low pressure and low temperature. Said economizer preferably produces hot water for subsequent production of steam.

A preferred heat source for the absorption chiller is the cooler-condenser of the nitrous gas but other waste heat sources can be used as an alternative or in addition to the cooler-condenser, to produce more chilled water. The advantage is that a larger flow rate of chilled water can be produced, more cooling can be provided to top stages of the absorber to enhance absorption without affecting the effectiveness of the bleaching step due to low temperature of nitric acid flowing from absorber bottom.

As mentioned above, the ammonia burner may include a cooled support, for example to support a tail gas heating coil. The cooled support is traversed internally by a cooling medium, usually water. Said cooled support is an interesting heat source for the absorption chiller. Recovering heat from here has the advantages that the cooling circuit of said support is a closed circuit, which can be directly supplied to the absorption chiller without any other intermediate stream; the temperature of the hot water sent to the chiller is higher than that of hot water obtainable from the nitrous gas cooler-condenser, which enables to deploy multiple stages of refrigeration; the heat from said cooled support of the ammonia burner is generated at all times during the process, hence it provides a reliable heat source for the chiller.

Another interesting heat source for the absorption chiller is the tail gas at some point of its processing and cooling, particularly after expansion. A waste heat recovery exchanger can be provided downstream of the tail gas expander economizer, preferably downstream of a boiler feed water heating. A related advantage is that more heat can be recovered from the tail gas, driving to a very low exhaust temperature, which increases the plant efficiency.

The chilled water produced by the absorption chiller may be used to chill other process streams than just the absorber. The advantage of chilling other streams in the process is an efficiency benefit.

In an interesting embodiment, one chilled stream is the air compressor suction and air compressor interstage. A related advantage is the power required for compression is lower as less inlet volume of air is compressed to the suction and the interstage; water from the inlet air can be knocked out before admitting to the process, which reduces the nitric acid dilution. Hence, more concentrated nitric acid is made.

Another stream that can be chilled is the water fed to the top of the absorber. Chilling said water may consume about from 10% to 30% of the chilling duty of absorber, and provides achieving a colder overheat temperature. Still another stream that can be chilled is the acid condensate leaving the cooler condenser before being supplied to the absorber.

The ammonia oxidation pressure is preferably not greater than 11 bar, more preferably from 7 to 10 bar. In a mono-pressure process, the ammonia oxidation pressure is substantially the pressure of the entire process apart from pressure drops. This pressure is relatively low, it supports a lower air compressor power without a large absorber; the chilling of the absorber compensates the low pressure; at this pressure, the dew point in the cooler condenser is about 90 to 130 °C which supports a large heat recovery for use in the chiller; the combination obtains benefits in the NOx absorber that would correspond to a higher pressure, but without compressing air. Another advantage is increased steam export.

The absorber upper stages temperature is preferably not greater than 25 °C, more preferably not greater than 20 °C. This temperature combined with a pressure of about 10 bar enables a NOx slip that ranges from 500 to 750 ppm of NOx in the tail gas.

The tail gas is preferably subjected to tertiary abatement of NOx and N2O. the term tertiary abatement denotes abatement performed downstream of the NOx absorber but before expansion of the tail gas. The tail gas temperature upstream of tertiary abatement is preferably not lower than 450 °C, more preferably not lower than 460 °C, still more preferably from 465 to 470 °C. In an embodiment, said tertiary abatement uses iron zeolite, preferably iron ferrierite, for NOx and N2O. Said high temperature before the tertiary abatement, combined with the preferred iron ferrierite catalyst for NOx reduction and N2O decomposition, enables to achieve a near complete removal of N2O down to a concentration not higher than 5 ppm, with relatively small volumes of catalyst.

Ammonia is the preferred reducing agent for NOx reduction. Ammonia is preferably added in an over-stoichiometric amount wherein the stoichiometric amount is calculated relative to the NOx in the tail gas. The amount (flow rate) of the added ammonia is preferably at least 1.1 times the stoichiometric amount, more preferably 1.3 to 1.5 times the stoichiometric amount. This excess ammonia enables to reduce completely the NOx content to concentrations not greater than 5 ppm. The excess of ammonia is oxidized by the same catalyst which enables a slip of ammonia to concentrations not greater than 5 ppm; this limited content of ammonia is advantageous because it reduces the risk of highly undesired formation of ammonium nitrate upon cooling of the expanded tail gas.

The cooling condenser inlet temperature is preferably lower than 160 °C, preferably less than 155 °C. The related advantage is a synergy with the other provisions of heat recovery at higher temperature. The heat recovered from the cooler condenser and used for the absorption chiller is low grade heat, which would be unsuitable for steam production or for heating the tail gas. Accordingly, the invention does not reduce the heat available for such purpose; rather it makes an efficient use of low-grade heat which, in the prior art, is generally lost to environment.

The temperature of the tail gas downstream of the expander is preferably from 150 to 250 °C. This temperature range is a fit both for heating demineralized water or boiler water feed preheating, or for an increased support of the chiller. Heat is preferably recovered in a waste heat recovery exchanger.

The hot stream to the absorption chiller is typically at a temperature not greater than 140 °C, preferably not greater than 130 °C, more preferably not greater than 125 °C. The advantage of using heat at low temperature is an advantageous exploitation of low-grade heat to power the chiller, without reducing the heat available for steam production or tail gas heating.

In the hot stream circuit connected to the absorption chiller, an additional cooler can be envisaged in order to manage transitory operation as startup. During warm-up of the plant, said circuit may be subject to overheating in certain circumstances. Said additional cooler may be provided to avoid such overheating.

The temperature of the hot water in the cooling circuit of the cooled support is kept preferably from 150 to 250 °C. This temperature range is preferred being compatible with both tail gas indirect heating, and to provide additional heat to the refrigeration; a temperature in this range is sufficiently high to avoid the risk of condensation of nitrous gas in the supports on the outer side; at the same time, it is low enough to ensure the allowable stress of the cooled support despite being exposed to a hot nitrous gas at above 800 °C from the oxidation.

The process of the invention may be performed in a stand-alone nitric acid plant or in a nitric acid plant connected to other facilities, for example to an ammonia plant or ammonium nitrate plant. If the nitric acid plant is connected to an ammonia plant, the steam exported by the nitric acid plant may be used in the tied-in ammonia plant. In case of a stand-alone nitric acid plant or when there is no steam user outside the nitric acid process, energy may be exported by the nitric acid process in the form of electric energy by providing a suitable electric generator for this purpose.

A nitric acid production plant according to the invention includes an absorption chiller connected to the NOx absorber and arranged to provide refrigeration to said absorber.

In broad terms, the plant includes a first circuit arranged to circulate a first heat transfer medium between the absorption chiller and at least one heat exchanger of the plant, and a second circuit arranged to circulate a second heat transfer medium between the absorption chiller and the NOx absorber. Said first medium is the heat source of the absorption chiller; it is heated in said at least one heat exchanger and provides a heat input for operation of the absorption chiller. Said second medium is the refrigerant of the NOx absorber, being cooled by the absorption chiller. Preferably the first medium is hot water or LP steam and the second medium is chilled water.

The chiller is preferably a Li-Br chiller. In a preferred embodiment plant said chiller is connected to the cooler condenser and the cooler condenser is split in two bodies, namely a warmer body and a cooler body. The exchanger has an internal tubesheet which separates the shell side in two chambers, namely one chamber for condensation by cooling water, and another chamber for heating a hot water stream for the chiller; the nitrous gas flows in the tube side; the tubes are made preferably of zirconium or bimetallic. Advantages of these materials for the tubes include space saving, cost saving, and corrosive resistant design.

In certain embodiments of the invention, the cooler-condenser and/or the bottom part of the absorber may be cooled with cooling water. The heat transferred to said cooling water may be recovered internally in the process. A preferred use of said heat is heating and evaporation of the ammonia feed, which reduces steam consumption. This is especially useful for medium-pressure process operating around 10 bar.

The ammonia burner is preferably integral with a waste heat boiler and may include a tail gas heating coil located in the ammonia burner. Said tail gas coil may be supported by a cooled support, cooled by a closed circuit of hot water. Advantages of this design include robust design, thin supports, external control of the cooling by controlling the water rate, availability of cooling or heating during transients of startup and shutdown. A bypass of said tail gas coil may be provided, to give better control of the temperature of the tail gas at the inlet of the abatement reactor.

Said closed circuit may also be fed with a heating medium if appropriate, for example during startup. Optionally, said closed circuit can be provided with an additional heater (electric or steam condensing) for startup. Heating this circuit during startup is advantageous to avoid undesired condensation.

The plant includes preferably at least one tail gas expander and one or more waste heat recovery exchanger(s) installed on the discharge of the expander and aimed at recovering waste heat as boiler feed water heating, hot water for the chiller, or both. The exchanger(s) are preferably designed with fins as an extended surface with the advantage that they are compact despite the near atmospheric pressure and resulting in low pressure drop. Said exchanger(s) are provided, preferably, with water spray on the outer tube side which can be used to wash away solid deposits which may lead to ammonium nitrate formation; or they are designed in two shells, one with fin tubes in the hotter part (first half) and one with straight tubes to control the risk of ammonium nitrate deposition.

The abatement reactor of the tail gas contains a suitable catalyst to remove N2O and NOx, preferably an iron zeolite catalyst, more preferably an iron ferrierite catalyst. Advantage is the resistance of this catalyst to temperature of up to 600 °C and its ability to decompose N2O, to oxidize excess ammonia, and to reduce NOx when combined with ammonia as a reductant.

In some embodiments, additional refrigeration to said NOx absorber can be provided by a vapour compression refrigeration (VCR) system. In such embodiments, a combined refrigeration of the NOx absorber is provided by the absorption chiller and the VCR system. In such embodiments, refrigeration may be provided at different temperature levels. Typically, a VCR system may provide a cold stream at a temperature lower than reached by an absorption refrigeration process, such as below 0 °C.

The invention can also be used for revamping of existing mono-pressure nitric acid plants. A revamp includes at least the installation of the absorption chiller and connection of the chiller to the NOx absorber and to at least one heat exchanger of the plant as heat source. Preferred or optional steps may include: replacing or modifying the cooler condenser so that it can provide the hot water to the chiller; installing the tail gas abatement reactor (if not originally provided) or revamping the same; increasing the inlet temperature of the tail gas expander; installing an economizer downstream the tail gas expander.

### Description of a preferred embodiment

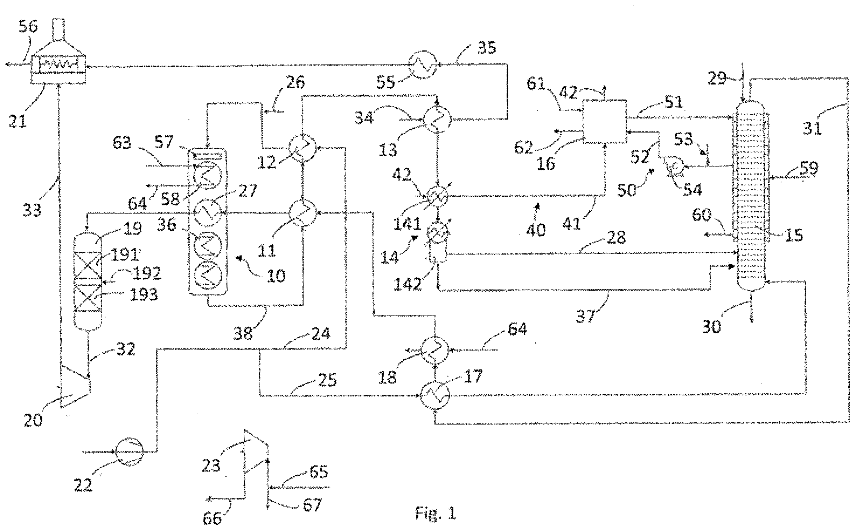

Fig. 1 is a diagram of a process/plant for production of nitric acid according to an embodiment of the invention.

Fig. 1 includes the following main items:
10 ammonia burner
11 low-temperature tail gas heater
12 air heater
13 economizer
14 cooler-condenser of the nitrous gas
141 first stage of the cooler condenser 14
142 second stage of the cooler condenser 14
15 NOx absorption column including a bleaching section in the lower portion
16 Li-Br absorption chiller
17 tail gas preheater
18 tail gas heater
19 tail gas reactor for removal of NOx and N2O
20 tail gas expander
21 tail gas economizer
22 air compressor
23 steam turbine driving the compressor 22
27 high-temperature tail gas heater
40 circuit of hot water between the first stage 141 of the cooler condenser 14 and the chiller 16
50 circuit of chilled water between the column 15 and the chiller 16
54 circulating pump of the chilled water circuit 50
57 Platinum-Rhodium catalyst gauze
58 cooled support of the catalyst gauze 57.

Compressed air is delivered by the air compressor 22 to the ammonia burner 10 via line 24 and to the absorption column via line 25. The compressor 22 is driven by the steam turbine 23, which is connected to the steam system of the plant. Ammonia is fed to the burner 10 from line 26.

In the burner 10, ammonia and air react over a suitable catalyst, for example a Platinum-Rhodium gauze 57. The nitrous gas formed in the ammonia burner 10 is first cooled in one or more heat exchangers incorporated in the burner 10, including for example a cooled support 58, the HT tail gas heater 27 and an evaporator with a steam superheater 36.

The cooled support 58 is connected to the tail gas heater 18 via a hot water circuit. Water in line 63 is heated in the cooled support and the so obtained hot water 64 is sent to said tail gas heater 18.

The nitrous gas 38 leaving the burner 10 is then further cooled in the heat exchangers 11, 12, 13 and in the cooler-condenser 14. The cooling step performed in the cooler-condenser 14 produces a stream of cooled gas and a stream of acid condensate which are sent to the column 15 via the gas line 28 and the acid condensate line 37, respectively.

The column 15 receives also a stream of fresh water 29 (process water); the absorption of NOx in water produces a nitric acid solution 30 collected at the bottom of the column 15 and a tail gas 31 withdrawn from the top of the column. The solution 30 for example has a concentration of nitric acid around 65% by weight.

The lower portion of the column 15 acts as bleacher, as common in mono-pressure nitric acid processes.

The acid condensate produced in the cooler-condenser 14 contains nitric acid less concentrated than the solution obtained at the bottom of the column 15. Accordingly, said acid condensate is introduced in the column 15 at a suitable height depending on its concentration. For example, the condensate in line 37 may contain around 30 to 40% by weight of nitric acid.

In this example, the cooler-condenser 14 is split into a first stage 141 and a second stage 142. The two stages 141, 142 may be housed in the same vessel or in separate vessels. The first stage 141 is connected to the chiller 16 by a hot water circuit 40. In the first stage 141, heat is transferred from the nitrous gas to hot water which is sent, via the feed line 41 of the circuit 40, to the chiller 16 to heat the desorber and provide the necessary heat input for operation of the water-LiBr absorption refrigeration process. Water returns from chiller 16 to the stage 141 via a return line 42.

The chiller 16 is also connected to the column 15 by a chilled water circuit 50. Chilled water produced by the chiller 16 is sent to the column 15 via line 51 and returns via line 52 thanks to a circulating pump 54. A make-up of water can be provided to said circuit 50 via line 53.

The column 15 is also cooled by cooling water entering at line 59 and exiting at line 60. Said cooling water is available at a temperature greater than that of the chilled water produced by the chiller 16. Typically, the cooling water of line 59 is around ambient temperature, for example 25 °C, whereas the chilled water in line 51 is about 5 °C or even less. Accordingly, the chilled water 51 is preferably used to refrigerate an upper set of trays of the column 15 and the cooling water 59 is used to cool an intermediate set of trays.

Lines 61, 62 refer to feed and return of cooling water used to remove heat discharged by the chiller 16.

For example, the chilled water in line 51 is at 5 °C; the return line 52 is at 12 °C; the hot water in line 41 is at 125 °C and the return line of the hot water 42 is at 90 °C.

The tail gas withdrawn with line 31 is heated in the heat exchangers 17, 18, 11, 27 before it reaches the reactor 19 where said tail gas is purified from N2O and NOx. In the example, the reactor 19 includes a first bed 191 for decomposition of N2O and a second bed 192 for reduction of NOx. Ammonia 193 is added to the gaseous stream after the first bed 191 before entering the second bed 192. The two beds may have the same catalyst or a different catalyst. The tail gas at the inlet of the reactor 19 has preferably a temperature of around 465 °C.

In some embodiments, a bypass of the coil 27 is provided. Accordingly, a portion of the tail gas may be sent to the reactor 19 without passing through the coil 27. This gives a more accurate control of the temperature of the tail gas at the inlet of the reactor 19.

The purified tailgas 32 from the reactor 19 is sent to the expander 20 to recover work and the expanded gas 33 is sent to the economizer 21 before it is discharged. A boiler feed water 34 is heated in the heat exchanger 13 with heat removed from the nitrous gas, and sent to the economizer 21; the hot water 56 from the economizer 21 is sent to a steam drum (not shown) and from here to the evaporator and superheater 36. The figure illustrates an embodiment with an optional heat exchanger 55 where the hot water is used to preheat the process water used as make-up in steam network.

In the example of Fig. 1, the heat input of the chiller 16 is provided entirely by the hot water from the cooler condenser 14. In other embodiment, other sources of heat in the process may be used to provide at least some of the heat input of the chiller 16. In an embodiment, at least part of the hot water 64 produced in the cooled support 58 may be used for this purpose.

Additionally, the chiller 16 may be used to refrigerate one or more other process streams in addition to refrigeration of the column 15.

Fig. 1 illustrate a chiller 16 for simplicity; in a preferred embodiment two chillers in parallel are provided.

The steam produced in the evaporator and superheater 36 is sent partly to the steam turbine 23 as shown by line 65. The expanded steam returns to the steam system via line 66. The line 67 denotes steam exported by the process. The invention allows to optimize the internal use of the heat produced by the oxidation of ammonia and, accordingly, to increase said export of steam.

## Claims

1. A mono-pressure process for the production of nitric acid starting from catalytic combustion of ammonia, including the steps of forming a nitrous gas (38) from combustion of ammonia in an ammonia burner (10) and feeding said nitrous gas, after cooling and condensation, to a NOx absorber (15) where nitrogen oxides are absorbed in water to obtain a nitric acid containing product (30), wherein heat recovered from the nitric acid production process is used to drive a vapor absorption refrigeration process arranged to provide refrigeration to said NOx absorber.

2. A process according to claim 1 said absorption refrigeration process being a water-ammonia or water- Lithium Bromide process.

3. A process according to claim 1 or 2 wherein heat used to drive said absorption refrigeration process includes heat recovered from the nitrous gas.

4. A process according to claim 3 wherein said heat recovered from the nitrous gas includes heat recovered from a cooler-condenser (14) of the nitrous gas upstream the NOx absorber.

5. A process according to claim 4 wherein: said cooler condenser (14) includes a first stage (141) where nitrous gas is cooled and a second stage (142) where the cooled and possibly condensed nitrous gas from the first stage is further cooled and condensed, wherein heat for the absorption refrigeration process is recovered at least from said first stage.

6. A process according to any of the previous claims wherein heat used to drive said absorption refrigeration process includes one or more of:
heat recovered directly from the ammonia burner; heat recovered from the tail gas after expansion of the same.

7. A process according to claim 6 wherein heat recovered directly from the ammonia burner includes heat recovered from a cooled support (58) located in the ammonia burner.

8. A process according to any of the previous claims wherein said vapor absorption refrigeration process, in addition to refrigeration to said NOx absorber, provides refrigeration to at least one other process stream of the nitric acid production process, preferably to one or more of: a suction stream or an inter-stage stream of an air compression stage feeding an ammonia burner with compressed air; a fresh water stream sent to the NOx absorber; an acid condensate stream leaving a cooler condenser of the nitrous gas prior to being supplied to the NOx absorber.

9. A process according to any of the previous claims, wherein the absorption of NOx is performed in a plurality of absorption stages vertically arranged in the NOx absorber and the refrigeration of the absorption refrigeration process is provided to one or more upper absorption stages.

10. A process according to claim 9 wherein one or more upper absorption stages, refrigerated by the absorption refrigeration process, are maintained at a temperature lower than 25 °C and preferably lower than 20 °C.

11. A process according to any of the previous claims wherein said absorption refrigeration process is performed in an absorption chiller (16) arranged to produce a refrigerant medium which circulates in a closed circuit between the NOx absorber and the absorption chiller.

12. A process according to claim 11 wherein said refrigerant medium is chilled water which is produced by the absorption chiller at a temperature not greater than 15 °C, preferably not greater than 10 °C.

13. A process according to claim 11 or 12 wherein at least one absorption stage is cooled by a heat exchange element which is internally traversed by the refrigerant medium delivered by the absorption chiller.

14. A process according to any of the previous claims wherein the pressure of the process is not greater than 11 bar and is preferably in the range 7 to 10 bar.

15. A process according to any of the previous claims including that: tail gas withdrawn from the NOx absorber is heated to a temperature of at least 450 °C; the so obtained heated tail gas is subject to a catalytic treatment to remove NOx and N2O; the so obtained purified tail gas is expanded to recover energy; after expansion, heat is recovered from the expanded gas in an economizer.

16. A process according to any of the previous claims wherein additional refrigeration to said NOx absorber is provided by a vapour compression refrigeration system.

17. A plant for the production of nitric acid according to the mono-pressure process starting from catalytic combustion of ammonia, comprising:
an ammonia burner (10) where ammonia is catalytically reacted in the presence of oxygen to form a nitrous gas;
a nitrous gas cooling section downstream the ammonia burner and including one or more gas coolers (11, 12, 13) and at least one cooler-condenser (14);
a NOx absorber (15) arranged to receive cooled nitrous gas (28) and acid condensate (37) from said cooler-condenser (14), wherein a nitric acid product (30) is obtained from the NOx absorber;
a tail gas treating section arranged to process a tail gas (31) withdrawn from said NOx absorber (15);
an absorption chiller (16) arranged to provide refrigeration to the NOx absorber;
a first circuit (40) arranged to circulate a first heat transfer medium between the absorption chiller (16) and at least one heat exchanger of the plant, said medium being heated in said at least one heat exchanger and providing a heat input for operation of the absorption chiller;
a second circuit (50) arranged to circulate a second heat transfer medium between the absorption chiller (16) and the NOx absorber (15), said medium being cooled by the absorption chiller and providing refrigeration to the NOx absorber.

18. A plant according to claim 17 wherein: said first circuit (40) connects the chiller (16) to the cooler condenser (14) or to at least one stage thereof, so that the cooler condenser provides at least part of the heat input for operation of the chiller.

19. A method for revamping a plant for the production of nitric acid according to the mono-pressure process starting from catalytic combustion of ammonia, wherein the plant comprises:
an ammonia burner (10) where ammonia is catalytically reacted in the presence of oxygen to form a nitrous gas;
a nitrous gas cooling section downstream the ammonia burner and including one or more gas coolers (11, 12, 13) and at least one cooler-condenser (14);
a NOx absorber (15) arranged to receive cooled nitrous gas (28) and acid condensate (37) from said cooler-condenser (14), wherein a nitric acid product (30) is obtained from the NOx absorber;
a tail gas treating section arranged to process a tail gas (31) withdrawn from said NOx absorber (15);
said method of revamping including the provision of at least:
an absorption chiller (16) arranged to provide refrigeration to the NOx absorber;
a first circuit (40) arranged to circulate a first heat transfer medium between the absorption chiller (16) and at least one heat exchanger of the plant, said medium being heated in said at least one heat exchanger and providing a heat input for operation of the absorption chiller;
a second circuit (50) arranged to circulate a second heat transfer medium between the absorption chiller (16) and the NOx absorber (15), said medium being cooled by the absorption chiller and providing refrigeration to the NOx absorber.
